## Europäisches Patentamt
## European Patent Office
## Office européen des brevets

(19)

(11) Veröffentlichungsnummer: **0 091 542**
**B1**

(12) **EUROPÄISCHE PATENTSCHRIFT**

(45) Veröffentlichungstag der Patentschrift:
**23.04.86**

(21) Anmeldenummer: **83101456.8**

(22) Anmeldetag: **16.02.83**

(51) Int. Cl.⁴: **B 29 D 30/30**

(54) **Verfahren zum Aufbauen von Luftreifen-Rohlingen.**

(30) Priorität: **10.04.82 DE 3213366**

(43) Veröffentlichungstag der Anmeldung:
**19.10.83 Patentblatt 83/42**

(45) Bekanntmachung des Hinweises auf die Patenterteilung:
**23.04.86 Patentblatt 86/17**

(84) Benannte Vertragsstaaten:
**AT DE FR GB IT LU SE**

(56) Entgegenhaltungen:
**DE - A - 1 429 029**
**DE - A - 2 507 726**
**DE - B - 2 420 329**

(73) Patentinhaber: **Continental Gummi-Werke Aktiengesellschaft, Königsworther Platz 1, D-3000 Hannover 1 (DE)**

(72) Erfinder: **Gerloff, Klaus, Dipl.-Ing., Tischbeinstrasse 5, D-3004 Iserhagen 2NB (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf Verfahren zum Aufbauen von Luftreifen-Rohlingen auf einer im wesentlichen zylindrischen durchmesserveränderlichen Aufbautrommel, wobei eine zugeschnittene Lage der Karkasse oder/und eines Gürtels auf die Aufbautrommel aufgebracht, zum Ausgleichen von Längenabweichungen gedehnt und mit stumpf aneinanderstoßenden Enden ringförmig geschlossen wird.

Die meistens aus Bahnen in Kautschuk eingebetteter paralleler Fäden oder Litzen bestehenden Verstärkungs- oder auch Gürtellagen müssen, um Unwuchten oder Schwachstellen in dem fertigen Reifen auszuschliessen, auf den Rohling nacheinander so aufgebracht werden, daß sie in jedem Falle einen in sich geschlossenen Ring mit lückenlos stumpf aneinanderstoßenden Enden bilden. Dies setzt neben dem Anpassen der Lagen an die mit fortschreitendem Aufbau wachsende Umfangslänge ein sorgfältiges, paßgerechtes Herstellen der Endlosverbindungen von Hand voraus. Da Trennschnitte durch die Lagen immer nur in dem Zwischenraum zwischen jeweils zwei oder meistens schräg zur Längsrichtung verlaufenden Festigkeitsträger geführt werden können, ist es nicht möglich, die Lagen mit genau der Umfangslänge entsprechend bemessener Länge vorab zuzuschneiden und aufzulegen. Üblicherweise werden sie auf ein Durchschnittsmaß zugeschnitten angeliefert und zum Zusammenführen der Enden auf der Aufbautrommel nach Bedarf von Hand gekürzt oder örtlich mehr oder weniger leicht gedehnt. Für den selbsttätigen Ablauf der Aufbauarbeiten bedeutet dieses bisher nur mit unmittelbaren manuellen Eingriffen zufriedenstellend zu bewältigende Ausgleichen unvermeidlicher Längendifferenzen in jedem Falle eine unerwünschte Unterbrechung. Nach einem bekannten Vorschlag (DE - B2 - 2 420 329) ist mit der Zielsetzung, die Behandlung auch mit Übermaß zugeschnittener Laufstreifen zu ermöglichen, ein gesondertes Vorabfertigen der Reifengürtel auf einer eigens hierfür benötigten zusätzlichen Trommel zusammen mit den zugehörigen Laufstreifen vorgesehen, wobei erst in anschließenden weiteren Arbeitsgängen die parallel dazu auf der Aufbautrommel hergestellte Reifenkarkasse in das Gürtel-Laufstreifen-Paket hineinbombiert wird. Der Erfindung liegt demgegenüber als Aufgabe zugrunde, mit einer neuartigen Verfahrensweise beim Aufbringen der Lagen und Herstellen der Stoßverbindungen jede Notwendigkeit zu Handarbeiten zu vermeiden und als Folge davon ein in allen Schritten vollautomatisches Aufbauen der Reifenrohlinge zu ermöglichen.

Nach der Erfindung wird, ausgehend von Verfahren der eingangs geschilderten Art, die Lage auf Untermaß zugeschnitten, der Umfang der Aufbautrommel genau der Länge der zugeschnittenen Lage durch Einstellen des Trommeldurchmessers auf einen gegenüber dem Enddurchmesser kleineren Durchmesser angepaßt und darauf die Aufbautrommel nach dem Aufbringen der Lage auf den Enddurchmesser gedehnt.

Die Erfindung bricht mit den bisher vorherrschenden Anschauungen, die Lagenlänge dem vorgegebenen Durchmesser der Aufbautrommel — unter Berücksichtigung der Schichtdicke auf dieser bereits vorhandener Lagen oder Lagenpakete — anpassen zu müssen, und sie schlägt stattdessen den umgekehrten Weg ein, den Trommeldurchmesser auf die exakt abgegriffene oder gemessene Länge der zugeschnittenen Lagen einzustellen. Unter diesen Voraussetzungen ergibt sich die angestrebte genau passende Stoßverbindung nach dem Aufbringen der Lagen auf die Trommel ohne weiteres Zutun von selbst, und die notwendige Korrektur der Umfangslänge kann dann anschließend durch verhältnismäßig geringfügiges Aufweiten der Aufbautrommel vorgenommen werden. Die Beschaffenheit der Lagen läßt ein plastisches Dehnen in Längsrichtung in den praktisch in Frage kommenden Grenzen ohne schädliche Rückwirkung auf die Lage und die Ausrichtung der Festigkeitsträger zu. Die ganzflächige Haftung der von Natur aus klebrigen Einbettungs-Kautschukmischung auf dem Trommelumfang bzw. dem schon vorher aufgebrachten Schichtenaufbau legt die Lage dabei gegen Längsverschiebungen fest, so daß die Stoßverbindung infolgedessen nur geringen Zugbeanspruchungen unterworfen wird und mit Sicherheit in ihrem Anfangszustand geschlossen bleibt.

Die Durchmesseränderungen der Aufbautrommel können mit der gewünschten Genauigkeit mit bekannten Mitteln vorgenommen werden, beispielsweise durch motorisches Verstellen eines den in Segmente unterteilten Trommelmantel stützenden Innenkegels in Axialrichtung. Ebenso läßt sich die Länge der zugeschnittenen Lagen mit üblichen Meßeinrichtungen, mit fotoelektrischen Tastern od. dgl., sehr genau bestimmen, während zum Messen der Umfangslänge der jeweils vorher auf die Trommel aufgebrachten Lage etwa ein mitlaufendes Meßrad Verwendung finden kann. Gegebenenfalls kann hierauf aber auch ganz verzichtet und der sich ändernde Trommelumfang rein rechnerisch ermittelt werden.

Die Erfindung ist anhand der schematischen Darstellung einiger für das Verfahren wichtiger Einzelheiten in der Zeichnung beispielsweise verdeutlicht. In der Zeichnung ist:

Fig. 1 eine fertig zugeschnittene Reifenkarkaß- oder -gürtellage stark schematisiert in perspektivischer Ansicht;

Fig. 2 ein Längsschnitt durch ein Teilstück des Ausgangsmaterials für die Lagen in vergrößertem Maßstab und

Fig. 3 die Stirnansicht einer eine einfache Lage tragenden Reifenaufbautrommel in getrennten Hälften im Ausgangs- (linker Teil) und im Endzustand (rechter Teil) eines Auflegevorganges.

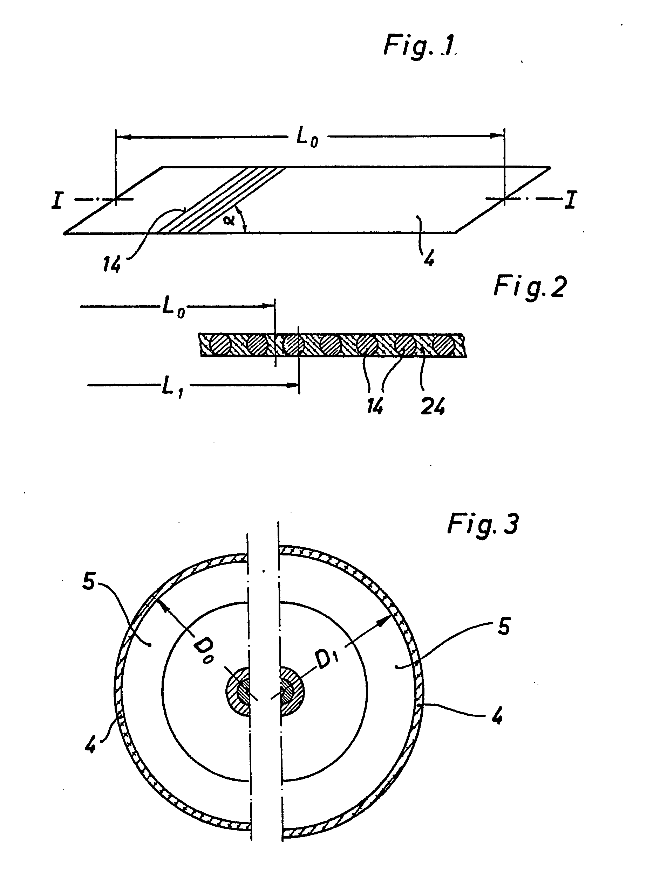

Die mit 4 bezeichnete Lage ist in üblicher Weise aus parallel zueinander mit gegenseitigen Abständen in eine Kautschukmischung 24 eingebetteten fadenförmigen Festigkeitsträgern 14 — Textilfäden oder Metalldrahtlitzen — aufgebaut. Die der Übersichtlichkeit halber nur zum Teil angedeuteten Festigkeitsträger 14 verlaufen geradlinig über die Lagenbreite unter einem spitzen Winkel $\alpha$ gegen die Längsrichtung, und in derselben Schrägrichtung sind auch die Enden der Lage 4 zugeschnitten, so daß diese die Gestalt eines langgestreckten Parallelogramms erhält. Die in Fig. 1 über die Mittellinie I ÷ I gemessene Länge Lo der spannungsfreien Lage ist als Ausgangsgröße angenommen, die als Ergebnis des erfindungsgemäßen Verfahrens auf das Sollmaß L1 auszudehnen ist.

Das Sollmaß L1 ist unter den in Fig. 2 gezeichneten Umständen nicht einstellbar, weil der Trennschnitt in diesem Falle durch einen der Festigkeitsträger 14 geführt werden müßte. Das bedeutet in der Praxis: Das Messer würde abgleiten und unvermeidlich vor oder hinter dem betreffenden Festigkeitsträger durch die Einbettungsmasse 24 schneiden. Nach dem neuartigen Verfahren wird der Trennschnitt von vornherein gezielt zwischen zwei einander benachbarte Festigkeitsträger 14 gelegt und der Lagenstreifen 4 mit einem im Vergleich zu seiner Konstruktionslänge L1 geringen Untermaß Lo zugeschnitten. Auf genau dieses Ausgangsmaß Lo als Umfangslänge wird aber auch der Anfangsdurchmesser Do der Aufbautrommel 5 (Fig. 3) eingestellt und damit die Voraussetzung geschaffen, daß die schräggeschnittenen Enden der Lage 4 nach dem Aufbringen auf die Trommel ohne Falten- oder Lückenbildung vollkommen dicht stumpf aneinanderstoßen. Von dieser in der linken Hälfte der Zeichnung angedeuteten Anfangsphase ausgehend wird die Aufbautrommel 5 im weiteren Verfahrensablauf auf den exakt dem Sollmaß L1 als Umfangslänge entsprechenden Enddurchmesser D1 ausgedehnt, wodurch wiederum auch die Lage 4 unter plastischer Dehnung der Einbettungsmasse 24 auf ihr vorgesehenes Sollmaß L1 geringfügig auseinandergezogen wird. Die Stoßverbildung bleibt dabei geschlossen.

Für das Aufbringen nachfolgender Lagen gelten grundsätzlich die gleichen Erwägungen. Besonders zu berücksichtigen ist allerdings stets der um jeweils die doppelte Schichtdicke sich ändernde Ausgangsdurchmesser der Trommel 5 bzw. des teilweise aufgebauten Reifenrohlings, der ein von Lage zu Lage wachsendes Maß für die Länge Lo notwendig macht. Der Ausdruck «Anfangsdurchmesser» ist dabei als das jeweils dem Enddurchmesser der vorhergehenden Lage entsprechende Ausgangsmaß zu verstehen. In jedem Falle ist die Schnittführung nach der errechneten oder abgegriffenen Umfangslänge der Trommel- bzw. Rohlingsoberfläche so zu legen, daß einmal eine einwandfreie Stumpfverbindung der Lagenenden und zum anderen aber auch eine Korrektur der Umfangslänge durch begrenztes Ausdehnen der Aufbautrommel möglich ist.

## Patentanspruch

Verfahren zum Aufbauen von Luftreifen-Rohlingen auf einer im wesentlichen zylindrischen durchmesserveränderlichen Aufbautrommel (5), wobei eine zugeschnittene Lage (4) der Karkasse oder/und eines Gürtels auf die Aufbautrommel aufgebracht, zum Ausgleichen von Längenabweichungen gedehnt und mit stumpf aneinanderstoßenden Enden ringförmig geschlossen wird, dadurch gekennzeichnet, daß die Lage (4) auf Untermaß (Lo) zugeschnitten, der Umfang der Aufbautrommel genau der Länge der zugeschnittenen Lage durch Einstellen des Trommeldurchmessers auf einen gegenüber dem Enddurchmesser kleineren Durchmesser (Do) angepaßt und darauf die Aufbautrommel nach dem Aufbringen der Lage auf den Enddurchmesser (D1) gedehnt wird.

## Claim

Process for building-up pneumatic type layers on a substantially cylindrical building-up drum (5) having a variable diameter, a ply (4) which has been cut to size for the carcase and/or for a belt being applied to the building-up drum, and such ply is extended to compensate for deviations in length and is annularly sealed with butt-jointed ends, characterised in that the ply (4) is cut to the reduced size (Lo); the circumference of the building-up drum is adapted to the exact length of the cut ply by adjusting the diameter of the drum to a diameter (Do) which is smaller than the final diameter; and subsequently the building-up drum is extended to the end diameter (D1) after the ply has been applied thereto.

## Revendication

Procédé pour la confection de préformes de pneumatique sur un tambour (5) sensiblement cylindrique et de diamètre variable, dans lequel une strate (4) découpée de la carcasse et/ou d'une ceinture est disposée sur les tambours de confection, allongée pour compenser les écarts de longeur puis fermée en anneau avec extrémités aboutées, ledit procédé étant caractérisé en ce que la strate (4) est découpée à une cote inférieure (Lo), la circonférence du tambour de confection est adaptée à la longueur de la strate découpée par réglage du diamètre du tambour à une valeur (Do) inférieure au diamètre final, puis le tambour de confection est porté au diamètre final (D1) après mise en place de la strate.

Fig. 1

Fig. 2

Fig. 3